# EUROPEAN PATENT APPLICATION

(11) **EP 1 519 540 A2**
(43) Date of publication of application: **30.03.2005**
(21) Application number: 04255912.0
(22) Date of filing: 28.09.2004
(51) Int. Cl.: H04L 29/06

(54) **Mobility device server**

(30) Priority: 29.09.2003 US 507197 P; 29.09.2003 US 506918 P; 29.09.2003 US 506919 P; 29.09.2003 US 506925 P; 22.01.2004 US 543735 P; 22.01.2004 US 538763 P; 22.01.2004 US 538915 P; 22.01.2004 US 538767 P; 30.04.2004 US 836934
(71) Applicant: Realm Systems, Inc., Salt Lake City, Utah 84124 (US)
(72) Inventor: Bookman, Peter, Draper, Utah 84020 (US); White, Rick Charles, Salt Lake City, Utah 84124 (US)
(74) Representative: Murnane, Graham John

(57) **Abstract**

A mobility device management server (MDMS) for use as part of a mobility device platform allowing for secure mobile computing is provided. In an illustrative implementation, an exemplary mobility device platform (MDP) comprises a mobility device (MD) operable to communicate with at least one computing environment through a communications interface and wherein the MD is operable to process and store secure web services, a communications network operable to communicate data and computing applications using web services, and a MDMS operable to generate, process, store, communicate and encrypt web services to the MD. Further, the MDMS is operable to perform one or more mobility device management functions to provide encryption keys to cooperating MDs and to authenticate and verify cooperating MDs requesting web services from the MDMS. The MDMS further may operate to perform metering functions and may operate to support intermittent connections between itself and cooperating MDs.

## Description

### CLAIM OF PRIORITY AND CROSS REFERENCE

This application claims the benefit of the following U.S. Provisional Patent Applications: 60/507,197, entitled, "GO-KEY SYSTEM," filed on September 29, 2003; 60/506,918, entitled, "GO-KEY ONLINE MUSIC SUBSCRIPTION AND DISTRIBUTION APPLICATION AND SERVICE," filed on September 29, 2003; 60/506,919, entitled, "GO-KEY E-MAIL APPLICATION AND SERVICE," filed on September 29, 2003; 60/506,925, entitled, "GO-KEY MOBILE DESKTOP ENVIRONMENT," filed on September 29,2003; 60/543,735, entitled, "MDMS," filed on January 22, 2004; 60/538,763, entitled, "OMNI FILE SYSTEM (OFS)," filed on January 22, 2004; 60/538,915, entitled, "UDDI DIRECTORY," filed on January 22, 2004; and 60/538,767, entitled, "UDDI REPOSITORY," filed on January 22, 2004, which are hereby incorporated by reference in their entirety. Additionally, this application is related to, cross-references, and herein, incorporates by reference in its entirety the following co-pending applications: 10/837,426, entitled, "MOBILITY DEVICE PLATFORM," (Attorney Docket: 45597/196314), filed on April 30, 2004, and 10/836,933, entitled, "MOBILITY DEVICE," (Attorney Docket: 45597/196314), filed on April 30, 2004.

### FIELD OF INVENTION

The herein described systems and methods relate to a mobile computing technologies, and more importantly, to a mobility device management server that allows for secure, remote mobile computing.

### BACKGROUND

Enterprises and individuals, alike, increasingly require mobility as a feature of their computing environment(s). For enterprises, mobility allows the deployment of personnel across disparate geographic locations allowing the enterprises to better serve their clients. For example, a large pharmaceutical corporation may wish to deploy their sales personnel in the "field" close to prospective customers (e.g. doctors). In such context, "field" personnel may wish to have access to sensitive sales and marketing information and computing application over a secure connection. With current solutions, these personnel are often left with the cumbersome task of "synchronizing" their data at the end of the day with their corporate network through some secure computer network connection (e.g. virtual private network). Comparatively, individuals seek mobility in their computing environments to allow for the ability to be close to their data and computing applications, and more importantly, to continually stay "connected" in the age of Internet communications.

Responsive to the need for mobile computing, computing environment manufacturers have developed mobile computing technologies (e.g. stand alone, networked, and/or embedded) that allow people to enjoy their computing environments on the road. Such mobile devices aim at allowing the user to "carry" their files and applications with them at all times. Although providing mobility, these devices tend to be marginally effective as they vary in form factor, processing capability, and portability. With such limitations, users are often relegated to lugging around large portable computers to ensure that they have all of their needed files and computing applications. Such practice is premised on the inherent deign of computing systems - namely employing "device-centric" computing.

With "device-centric" computing users, although may have access to files remotely and securely via remote communications applications (e.g. virtual private networks), still are relegated to carry around large cumbersome computing instrumentalities to retrieve their data and computing applications. More importantly, with device centric computing, users are generally provisioned one device for their enterprise computing needs (e.g. company personal computer, or laptop) and generally have one or more computing environments in their home for personal use. In maintaining multiple computing environments, computer users are charged with the task of synchronizing their custom preferences and settings among their many different computing environments. Such task is arduous at best and often leaves computer users frustrated in not having access to desired data and/or computing applications between their many different computing environments.

For example, a computer user may wish to have their financial planning and management data from his/her financial planning and management computing application (e.g. Quicken, Microsoft Money) with them at all times to address any payments that might spring up (e.g. a lapsed bill). With current solutions, the computing user is relegated to install the financial planning and management computing application and data on each of his/her computing environments (including his/her corporate computer - which may be in violation of corporate computing policies and procedures) so that he/she can have access to this desired data. Comparatively, enterprises may wish to effectively and immediately terminate all access to sensitive corporate data from employees who are to be terminated. Under current practices that are based on device-centric computing, the employee is asked to turn in their computing environments (e.g. laptops, personal computers, mobile phone, or personal digital assistants). Additionally, the soon-to-be terminated employee may be restricted in their use of corporate data by terminating their enterprise user directory information. However, there is an inherent latency in collecting such devices and terminating access. Such latency could result in the employee copying files from the enterprise computing environment for their subsequent use. As such, under existing practices sensitive enterprise data may be compromised.

From the foregoing it is appreciated that there exists a need to overcome the shortcomings of existing practices.

### SUMMARY

A mobility device management server for use as part of a mobility device platform allowing for secure mobile computing is provided. In an illustrative implementation, an exemplary mobility device platform comprises a mobility device operable to communicate with at least one computing environment through a communications interface and wherein the mobility device is operable to process and store secure web services, a communications network operable to communicate data and computing applications using web services, and a mobility device management server operable to generate, process, store, communicate and encrypt web services to the mobility device. Further, the mobility device management server is operable to perform one or more mobility device management functions to provide encryption keys to cooperating mobility devices and to authenticate and verify cooperating mobility devices requesting web services from the mobility device management server. The mobility device management server and mobility device may further operate to perform authentication and verification using user identification and password information. The mobility device management server further may operate to perform metering functions and operations on web services being processed and executed on the mobility device platform. Furthermore, the mobility device management server may operate to support intermittent connections between itself and cooperating mobility devices.

In operation, the exemplary mobility device is configured for use on a cooperating computing environment. Further the mobility device establishes communications with cooperating one or more mobility device management servers and attempts to be authenticated and verified by the cooperating one or more mobility device management servers using selected authentication and verification information. Upon authentication and verification, the cooperating one or more mobility device management servers process requests for data and computing applications from the cooperating exemplary mobility device using web services. The web services are encrypted by the cooperating one more mobility device management servers using the exemplary selected authentication and verification information (e.g. keys) to allow secure communications of requested data and computing applications from the cooperating one more mobility device management servers and the exemplary mobility device.

Other features of the herein described systems and methods are further described below.

### BRIEF DESCRIPTION OF THE DRAWINGS

The mobility device platform and methods of use are further described with reference to the accompanying drawings in which:

Figure 1 is a block diagram of an exemplary computing environment in accordance with an implementation of the herein described systems and methods;

Figure 2 is a block diagram of an exemplary computing network environment in accordance with the herein described system and methods;

Figure 3 is a block diagram showing the interaction between exemplary computing components in accordance with the herein described systems and methods;

Figure 4 is a block diagram of an illustrative implementation of a mobility device platform in accordance with the herein described systems and methods;

Figure 5 is a block diagram of an exemplary architecture of an illustrative mobility device management server in accordance with the herein described systems and methods ;

Figure 6 is a flow diagram of the processing performed by an illustrative mobility device management server to handle user and device management in accordance with the herein described systems and methods;

Figure 7 is a flow diagram of the processing performed by an illustrative mobility device management server when processing web services requests in accordance with the herein described systems and methods;

Figure 8 is a flow diagram of the processing performed by an illustrative mobility device management server when translating web services during web services processing in accordance with the herein described systems and methods;

Figure 9 is a flow diagram of the processing performed by an illustrative mobility device management server when performing metering and intermittent connection processing in accordance with the herein described systems and methods.

### DETAILED DESCRIPTION

### Overview:

The herein described systems and methods offer a "user-centric" approach to computing and mobile computing. Current computing solutions, enterprise or individual, are generally designed using a "device-centric" model. The device-centric model aims at managing and tracking users based on device assignments and designations. For example, in the context of enterprise computing, the enterprise computing environment may comprise a number of server computing environments and numerous client computing environments. Generally, each user in the enterprise is provisioned client computing environment (e.g. personal computer or laptop computer) that is generally networked to the server computing environment through the enterprise communications interface or, if the user is remote to the enterprise communications network, through a virtual private network (VPN). Additionally, in conventional enterprise computing environments, the users are provided user identification information and password information through a directory services structure that associates user rights and privileges to certain enterprise data and computing applications.

With such enterprise computing environments, the user is often relegated to be only allowed to customize his/her provisioned computing environment with their preferences and settings such that if the user roams across the network and logs onto to a computing environment other than their own, they do not have access to their custom preferences and settings. This problem is also seen as enterprise users wishing to maintain synchronization in preferences and settings (e.g. browser bookmarks, look and feel of desktop, color scheme, layout of applications, and directory structure for files) between their enterprise computing environment and their personal computing environment (e.g. home computer) are often relegated to perform manual synchronization.

Moreover, with existing enterprise computing environments administration of the numerous client computing environments becomes a daunting task. Currently, enterprises hire information technology departments numbering in the tens, in not hundreds, to support the many users and their computing environments. Beyond mere physical administration, integrity and security of corporate data is put into play with the device-centric computing model. In such context, enterprise computing users are often left to their own volition in copying and comprising sensitive enterprise data. As the task of preventing users from unauthorized copying of enterprise files and data is daunting at best, most enterprises turn a blind eye. Such limitation of existing practices can be very costly to enterprises and individuals alike.

The herein described systems and methods aim to ameliorate the shortcomings of existing practices by providing a mobility device platform (MDP) designed using a "user-centric" model. In an illustrative implementation, the mobility device platform comprises at least one mobility device (MD) operable to communicate with one or more cooperating computing environments (e.g. personal computer, personal digital assistant, mobile phone, networked computer, and other computing environments) through a communications interface (e.g. universal serial bus (USB), IEEE 1394 communications interface (Firewire), 802.XX communications interface, blutetooth communications interface, personal computer interface, small computer serial interface, and wireless application protocol (WAP) communications interface). Additionally, the mobility device platform comprises one or more mobility device management servers (MDMS) that operate to authenticate and verify and provide user management for cooperating mobility devices and their users.

In operation, the mobility device may cooperate with one or more computing environments invoking one or more work spaces to process web services. The web services may be executed from data and computing applications local to the MD, or the MD may cooperate with one or more MDMS to obtain the desired web service. The MDMS may operate to authenticate requesting MDs to ensure that they have the rights and privileges to the requested web services. Additionally, the MDMS may cooperate with third party web service providers to obtain requested web services. In such context, the MDMS may act to translate the web service from a non-MD native web service format to a native MD web service. When communicating web services from the MDMS to cooperating MDs, the MDMS and MD engage in 1028 bit and/or 2056 bit encryption (e.g. PKI encryption) using user and device authentication and verification information. The web services provided by the MDMS to the MD may include but are not limited to computing applications and desired data. Additionally, the MD may operate to store the participating user's customized settings and preferences local to the MD so they are available to the user at all times.

As such with the mobility device platform users may traverse any number of cooperating computing environments confident that they will have access to their customized settings and preferences and, more importantly, secure access to their computing applications and files (e.g. as provided as web services).

### Web Services:

Services provided over the a communications network such as the internet Internet, commonly referred to as web services or application services, are evolving. Likewise, technologies that facilitate such services are also evolving. A web service can be defined as any information source running business logic processes conveniently packaged for use by an application or end-user. Web services are increasingly becoming the means through which one can provide functionality over a network. Web services typically include some combination of programming and data that are made available from an application server for end users and other network-connected application programs. Web services range from such services as storage management and customer relationship management down to much more limited services such as the furnishing of a stock quote and the checking of bids for an auction item.

Activities focusing on defining and standardizing the use of web services include the development of Web Services Description Language (WSDL). WSDL is an Extensible Markup Language (XML) format for describing web services as a set of endpoints operating on messages containing either document-oriented or procedure-oriented information. The operations and messages are described abstractly, and then bound to a concrete network protocol and message format to define an endpoint. Related concrete endpoints are combined into abstract endpoints (services).

Currently, the advocated web service usage model is generally as follows.

(1) Services are implemented and deployed on one site, often referred to as the server side.

(2) Services are described using WSDL and are published via means such as UDDI (Universal Description, Discovery, and Integration), which is an XML-based registry for businesses worldwide to list themselves on the Internet by the web services they offer.

(3) Client applications use web services at another site, often referred to as the client side, by first interpreting one or more WSDL documents. Once interpreted, the clients can understand the characteristics of the associated service(s). For example, service characteristics may include service API specifications such as (a) input data type, (b) service input data format, (c) service access mechanism or style (e.g., RPC versus messaging), and (d) related encoding format.

(4) Client applications prepare their data in manners in which various particular web services understand.

(5) Client applications invoke a particular service according to the manner specified for the service, such as in an associated WSDL document.

Many differences exist among web services with respect to the format of input data and the manner in which they are invoked. For example, suppose one application service provider provides a service, getCityWeather, that requires a single input parameter, such as a conventional city name (e.g., SLC for Salt Lake City). A client application that intends to invoke such a service needs to be written so that data within or output by the application is able to be analyzed to extract the city information. At runtime, the prepared symbol is passed to the getCityWeather service site using appropriate APIs.

However, suppose another application service provider provides a similar service that requires two input parameters, such as the city name and the zip code. Hence, if a client application intends to invoke this second service, it needs to analyze and extract its data appropriately in regards to the required service input parameters. Therefore, if a single application was intended to invoke both services, the application would have to be hard-coded with service-specific API information and procedures. Furthermore, if the application was intended to invoke numerous services, the application would have to be hard-coded with service-specific API information and procedures related to each and every service that it intended to invoke.

As explained above, various web services may provide similar functionality but differ in many ways. The herein described system and methods aim to ameliorate such disparity by offering a mobility device platform having a mobile device management server which includes, among other things, a web services translation module operative to accept data from web services web services providers and present them in a web service model native to cooperating mobility devices.

### Simple Object Access Protocol (SOAP) Overview:

The Simple Object Access Protocol (SOAP) is a lightweight, XML-based protocol for exchanging information in a decentralized, distributed environment. SOAP supports different styles of information exchange, including:

Remote Procedure Call style (RPC), which allows for request-response processing, where an endpoint receives a procedure oriented message and replies with a correlated response message.

Message-oriented information exchange, which supports organizations and applications that need to exchange business or other types of documents where a message is sent but the sender may not expect or wait for an immediate response.

Generally, a SOAP message consists of a SOAP envelope that encloses two data structures, the SOAP header and the SOAP body, and information about the name spaces used to define them. The header is optional; when present, it conveys information about the request defined in the SOAP body. For example, it might contain transactional, security, contextual, or user profile information. The body contains a Web Service request or reply to a request in XML format. The high-level structure of a SOAP message is shown in the following figure.

SOAP messages, when used to carry Web Service requests and responses, can conform to the web services definition language (WSDL) definition of available Web Services. WSDL can define the SOAP message used to access the Web Services, the protocols over which such SOAP messages can be exchanged, and the Internet locations where these Web Services can be accessed. The WSDL descriptors can reside in UDDI or other directory services, and they can also be provided via configuration or other means such as in the body of SOAP request replies.

There is a SOAP specification (e.g. w3 SOAP specification - found at www.w3.org) that provides a standard way to encode requests and responses. It describes the structure and data types of message payloads using XML Schema. The way that SOAP may be used for the message and response of a Web Service is:

The SOAP client uses an XML document that conforms to the SOAP specification and which contains a request for the service.

The SOAP client sends the document to a SOAP server, and the SOAP servlet running on the server handles the document using, for example, HTTP or HTTPS.

The Web service receives the SOAP message, and dispatches the message as a service invocation to the application providing the requested service.

A response from the service is returned to the SOAP server, again using the SOAP protocol, and this message is returned to the originating SOAP client.

It is appreciated that although SOAP is described herein as a communication protocol for the herein described systems and methods that such description is merely illustrative as the herein described systems and methods may employ various communication protocols and messaging standards.

### Illustrative Computing Environment

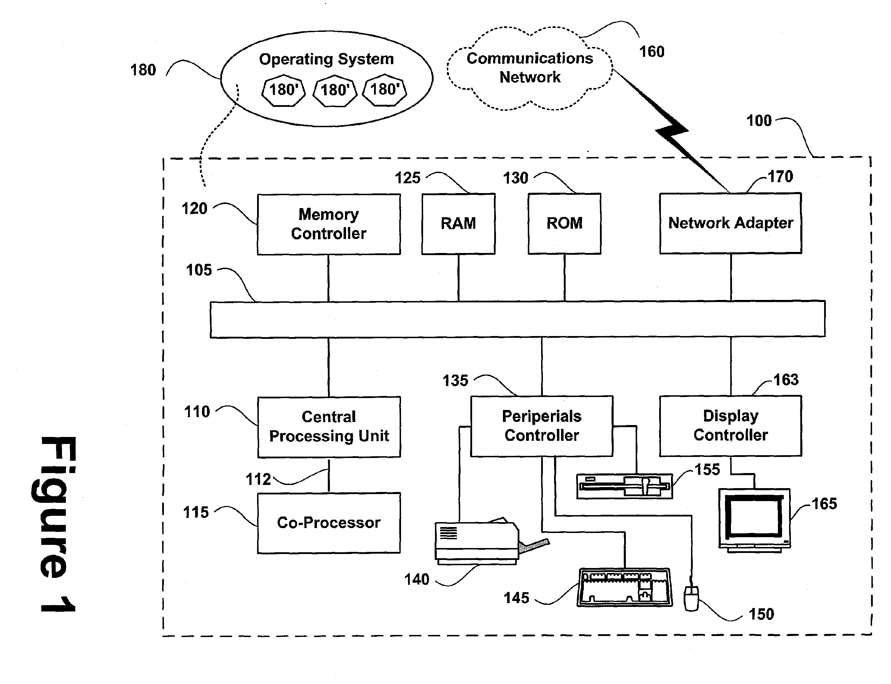

Figure 1 depicts an exemplary computing system 100 in accordance with herein described system and methods. Computing system 100 is capable of executing a variety of operating systems 180 and computing applications 180' (e.g. web browser and mobile desktop environment) operable on operating system 180. Exemplary computing system 100 is controlled primarily by computer readable instructions, which may be in the form of software, where and how such software is stored or accessed. Such software may be executed within central processing unit (CPU) 110 to cause data processing system 100 to do work. In many known computer servers, workstations and personal computers central processing unit 110 is implemented by micro-electronic chips CPUs called microprocessors. Coprocessor 115 is an optional processor, distinct from main CPU 110, that performs additional functions or assists CPU 110. CPU 110 may be connected to co-processor 115 through interconnect 112. One common type of coprocessor is the floating-point coprocessor, also called a numeric or math coprocessor, which is designed to perform numeric calculations faster and better than general-purpose CPU 110.

It is appreciated that although an illustrative computing environment is shown to comprise a single CPU 110 that such description is merely illustrative as computing environment 100 may comprise a number of CPUs 110. Additionally computing environment 100 may exploit the resources of remote CPUs (not shown) through communications network 160 or some other data communications means (not shown).

In operation, CPU 110 fetches, decodes, and executes instructions, and transfers information to and from other resources via the computer's main data-transfer path, system bus 105. Such a system bus connects the components in computing system 100 and defines the medium for data exchange. System bus 105 typically includes data lines for sending data, address lines for sending addresses, and control lines for sending interrupts and for operating the system bus. An example of such a system bus is the PCI (Peripheral Component Interconnect) bus. Some of today's advanced busses provide a function called bus arbitration that regulates access to the bus by extension cards, controllers, and CPU 110. Devices that attach to these busses and arbitrate to take over the bus are called bus masters. Bus master support also allows multiprocessor configurations of the busses to be created by the addition of bus master adapters containing a processor and its support chips.

Memory devices coupled to system bus 105 include random access memory (RAM) 125 and read only memory (ROM) 130. Such memories include circuitry that allows information to be stored and retrieved. ROMs 130 generally contain stored data that cannot be modified. Data stored in RAM 125 can be read or changed by CPU 110 or other hardware devices. Access to RAM 125 and/or ROM 130 may be controlled by memory controller 120. Memory controller 120 may provide an address translation function that translates virtual addresses into physical addresses as instructions are executed. Memory controller 120 may also provide a memory protection function that isolates processes within the system and isolates system processes from user processes. Thus, a program running in user mode can normally access only memory mapped by its own process virtual address space; it cannot access memory within another process's virtual address space unless memory sharing between the processes has been set up.

In addition, computing system 100 may contain peripherals controller 135 responsible for communicating instructions from CPU 110 to peripherals, such as, printer 140, keyboard 145, mouse 150, and data storage drive 155.

Display 165, which is controlled by display controller 163, is used to display visual output generated by computing system 100. Such visual output may include text, graphics, animated graphics, and video. Display 165 may be implemented with a CRT-based video display, an LCD-based flat-panel display, gas plasma-based flat-panel display, a touch-panel, or other display forms. Display controller 163 includes electronic components required to generate a video signal that is sent to display 165.

Further, computing system 100 may contain network adaptor 170 which may be used to connect computing system 100 to an external communication network 160. Communications network 160 may provide computer users with means of communicating and transferring software and information electronically. Additionally, communications network 160 may provide distributed processing, which involves several computers and the sharing of workloads or cooperative efforts in performing a task. It will be appreciated that the network connections shown are exemplary and other means of establishing a communications link between the computers may be used.

It is appreciated that exemplary computer system 100 is merely illustrative of a computing environment in which the herein described systems and methods may operate and does not limit the implementation of the herein described systems and methods in computing environments having differing components and configurations as the inventive concepts described herein may be implemented in various computing environments having various components and configurations.

### Illustrative Computer Network Environment:

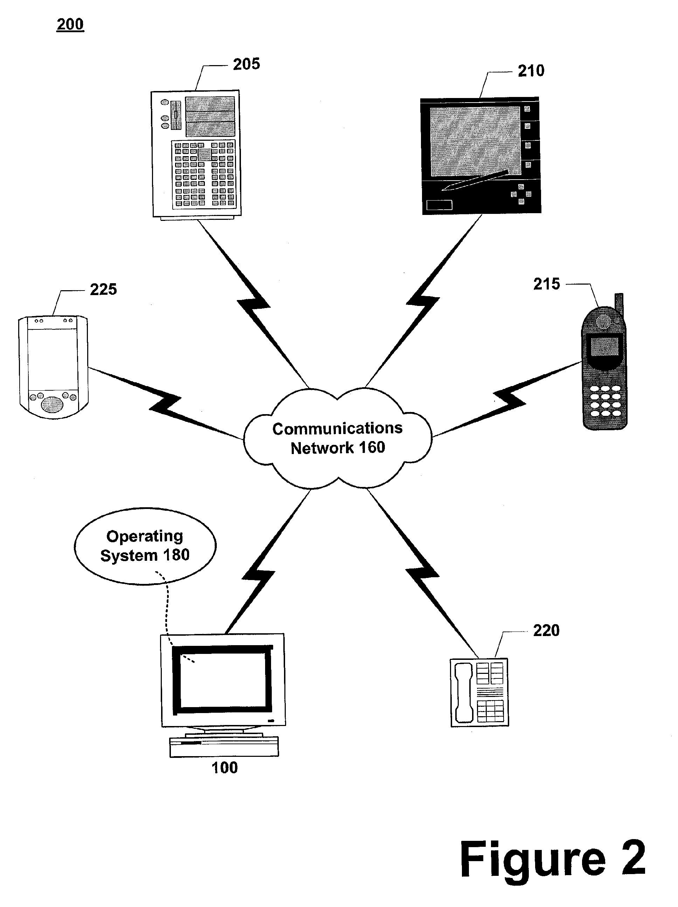

Computing system 100, described above, can be deployed as part of a computer network. In general, the above description for computing environments applies to both server computers and client computers deployed in a network environment. Figure 2 illustrates an exemplary illustrative networked computing environment 200, with a server in communication with client computers via a communications network, in which the herein described systems and methods may be employed. As shown in Figure 2 server 205 may be interconnected via a communications network 160 (which may be either of, or a combination of a fixed-wire or wireless LAN, WAN, intranet, extranet, peer-to-peer network, the Internet, or other communications network) with a number of client computing environments such as tablet personal computer 210, mobile telephone 215, telephone 220, personal computer 100, and personal digital assistance 225. Additionally, the herein described systems and methods may cooperate with automotive computing environments (not shown), consumer electronic computing environments (not shown), and building automated control computing environments (not shown) via communications network 160. In a network environment in which the communications network 160 is the Internet, for example, server 205 can be dedicated computing environment servers operable to process and communicate web services to and from client computing environments 100, 210, 215, 220, and 225 via any of a number of known protocols, such as, hypertext transfer protocol (HTTP), file transfer protocol (FTP), simple object access protocol (SOAP), or wireless application protocol (WAP). Each client computing environmet 100, 210, 215, 220, and 225 can be equipped with browser operating system 180 operable to support one or more computing applications such as a web browser (not shown), or a mobile desktop environment (not shown) to gain access to server computing environment 205.

In operation, a user (not shown) may interact with a computing application running on a client computing environments to obtain desired data and/or computing applications. The data and/or computing applications may be stored on server computing environment 205 and communicated to cooperating users through client computing environments 100, 210, 215, 220, and 225, over exemplary communications network 160. A participating user may request access to specific data and applications housed in whole or in part on server computing environment 205 using web services transactions. These web services transactions may be communicated between client computing environments 100, 210, 215, 220, and 220 and server computing environments for processing and storage. Server computing environment 205 may host computing applications, processes and applets for the generation, authentication, encryption, and communication of web services and may cooperate with other server computing environments (not shown), third party service providers (not shown), network attached storage (NAS) and storage area networks (SAN) to realize such web services transactions.

Thus, the systems and methods described herein can be utilized in a computer network environment having client computing environments for accessing and interacting with the network and a server computing environment for interacting with client computing environments. However, the systems and methods providing the mobility device platform can be implemented with a variety of network-based architectures, and thus should not be limited to the example shown. The herein described systems and methods will now be described in more detail with reference to a presently illustrative implementation.

### Cooperation of Mobility Device Platform Components:

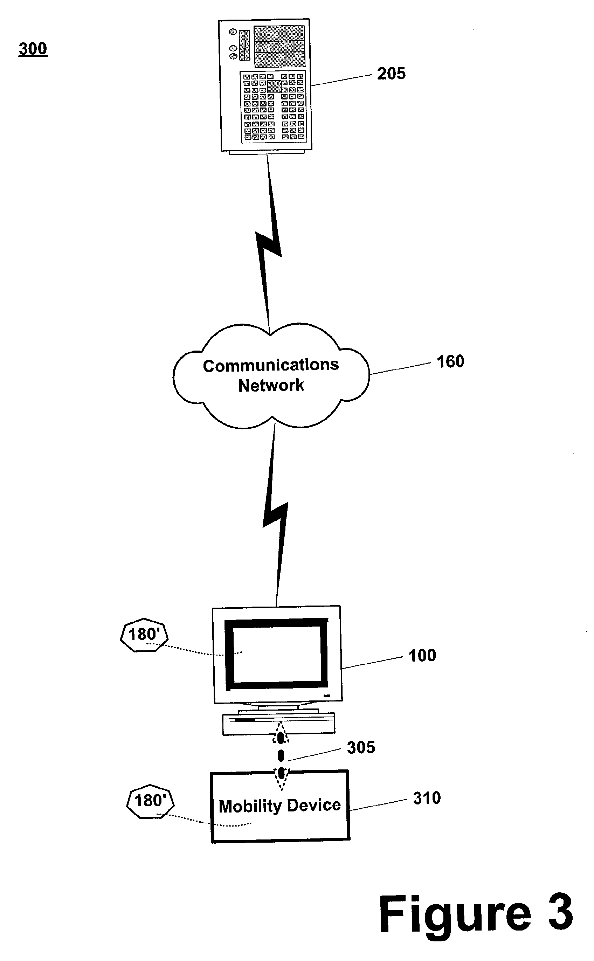

Figure 3 shows an exemplary interaction between the components of an exemplary mobility device platform. Generally as is shown in Figure 3, exemplary mobility device platform 300, in simple terms, may comprise mobility device 310 cooperating with client computing environment 100 using communications interface 305 operating on a selected communications protocol (not shown). Additionally, exemplary mobility device platform 300 may further comprise communications network 160 (of Figure 1) and server computing environment 205.

In operation mobility device may cooperate with client computing environment 100 through communications interface 305 to execute one or more computing applications 180' originating from mobility device 310 and displayable for user interaction on client computing environment 100. Computing applications 180' may include but are not limited to, a browser application offering the look and feel of conventional operating systems, word processing applications, spreadsheets, database applications, web services applications, and user management/preference applications. Additionally, mobility device 310 may cooperate with server computing environment 205 via communications network 160 using client computing environment 100 to obtain data and/or computing applications in the form of web services.

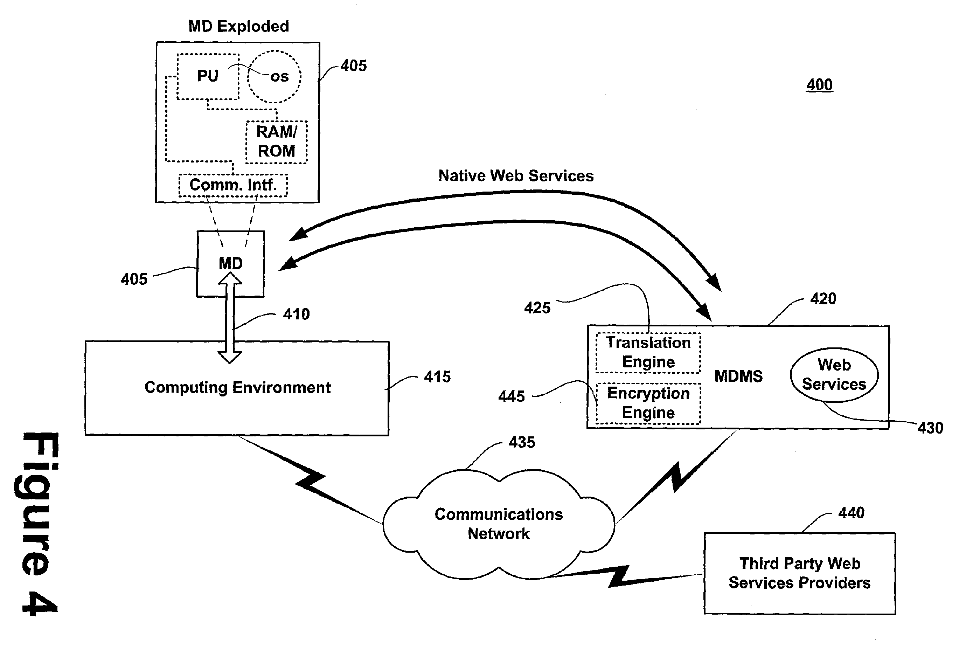

Figure 4 shows the interaction of components for exemplary mobility device platform 400. As is shown in Figure 4, exemplary mobility device platform 400 comprises mobility device (MD) 405, computing environment 410, communications network 435, mobility device management server (MDMS) 420 and third party web service providers 440. Additionally, as is further shown in the MD exploded view, MD 405 further comprises processing unit (PU), operating system (OS), storage memory (RAM/ROM), and an MD communications interface. Also, MDMS 420 further comprises translation engine 425, web services 430, and encryption engine 445.

In operation, MD 405 communicates with computing environment 415 using one or more of MD components PU, OS, RAM/ROM and MD communications interface through MD/computing environment communications interface 410. When communicating with computing environment 415, MD 405 may launch one or more computing applications (not shown) that may include but are not limited to, a mobile desktop environment, user customization and authentication manager, and web services applications as part of configuration. Once configured, MD 405 may further cooperate with computing environment 415 to process one or more web services (e.g. web service data and/or computing applications). In such context, MD 405 may also request web services data and/or computing applications from cooperating MDMS 420 using communications network 435 to process such web services. In such instance, MDMS 420 may operate to authenticate MD 405 to ensure that the participating user (not shown) and mobility device 405 have the correct privileges to the requested data and/or computing applications. Such authentication processing can also employ one or more security peripherals (not shown) that can be resident on MD 405 that include but are not limited to biometric security peripheral, retinal scan security peripheral, and voice recognition security peripheral.

If properly authenticated, MDMS 420 may further operate to locate the requested data and/or computing applications locally at MDMS 420 and provide such requested data and/or computing applications (e.g. web services) to the authenticate MD 405 over communications network 435, or operate to cooperate with third party services providers 440 to obtain the requested web services for communication to the authenticated MD 405. When cooperating with third party web services providers 440, MDMS 420 may operate to translate the web services 430 originating from third party web services providers 440 to an MD native format using translation engine 425. Additionally, MDMS 420 may operate to encrypt requested web services using encryption engine 445 when satisfying requests for web services from authenticated MD 405.

Additionally, MDMS 420 may further operate to cooperate with a file system (not shown) using a selected encryption protocol (e.g. PKI encryption) to obtain the requested data for communication to MD 405. The cooperating file system may include but is not limited to file allocation table (FAT) file systems and new technology files system (NTFS).

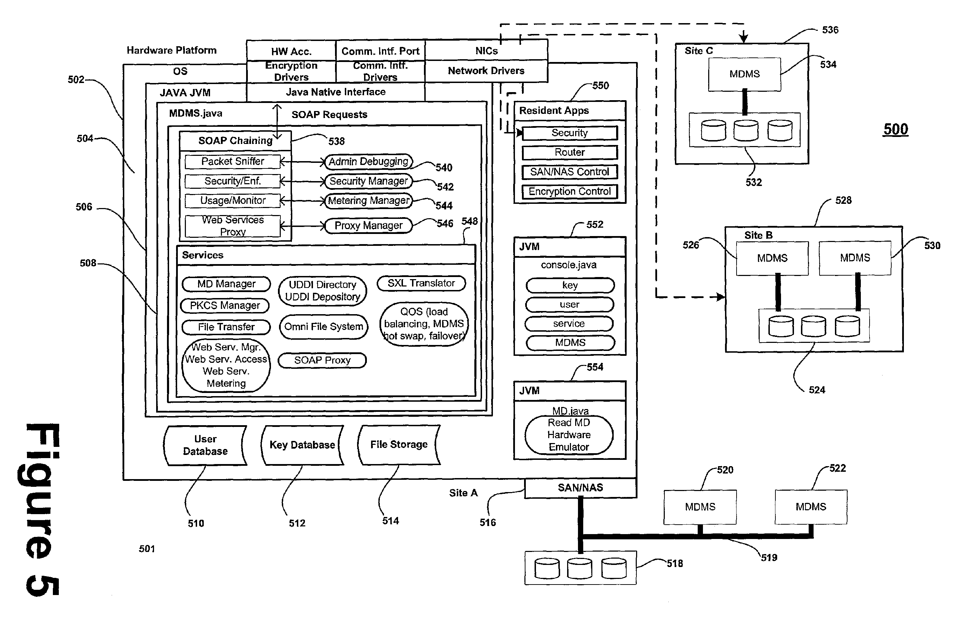

Figure 5 is block diagram showing exemplary components of an illustrative mobility device management server (MDMS) deployed in an illustrative networked computing environment. As is shown, illustrative networked computing environment comprises Site A, Site B, and Site C, respectively, having exemplary MDMSs and components. Site A comprises MDMS 502 which itself comprises operating system 504. Operating system (OS) 504 is shown to support java virtual machine (JVM) 506 which, in turn, supports MDMS.java code 508. MDMS.java code 508 therein comprises SOAP chaining 538 and services 548. Additionally, Operating system 504 is operative to support and cooperate with user database 510, key database 512, and file storage 514. Also, Operating system 504 is operative to support and cooperate with resident applications 550, JVM 552, and JVM 554. Furthermore, OS 504 is operative to support and cooperate with encryption drivers, communication interface drivers and network drivers. Mirroring OS 504, MDMS 502 maintains hardware such as hardware accelerator, communications interface port, and network interface cards (NICs) that cooperate with the encryption drivers, communications interface drivers, and network drivers during MDMS 502 operation.

Additionally as shown, MDMS comprises storage area network (SAN)/network attached storage (NAS) interface 516 that is operable to connect MDMS 502 to cooperating file/data stores 518 and cooperating MDMSs 520 and 522. SAN/NAS interface 516 may be coupled to cooperating file/data storage and MDMSs 520 and 522 through communications network 519. Also, as is shown, MDMS 502 may cooperate with other MDMS environments 536 and 528 that may reside local to or geographically disparate from MDMS 502. MDMS environment 536 may comprise MDMS 534 and file/data store 522. Similarly, MDMS environment 528 may comprise MDMS 526 and MDMS 530 operatively coupled to file/data store 524.

Within SOAP chaining module 538 there may reside a number of sub-modules that include but are not limited to, a packet sniffer operative to monitor data communications, security enforcement operative to maintain data privileges and access, usage/monitor operative to meter services usage, and a web services proxy operative to cache web services for cooperation with requesting components (e.g. authenticated MD, not shown). These sub-modules may be controllable by one or more sub-module applications that may include but are not limited to administration debugger operating on the packet sniffer sub-module, security manager operative on the seucurity/enforcement sub-module, metering manager operative on the usage/monitor sub-module, and proxy manager operative on the web services proxy.

Within the service module 548 there may reside a number of service that may include but are not limited to a mobility device manager, an encryption manager (PKCS manager), a file transfer service, a web services manager, web services access control service, a web services metering service, a universal, description, discovery, and integration directory (UDDI directory) service, a UDDI repository service, a files system (e.g. Omni file system), a SOAP proxy service, a web services translator service, and a quality of service operation that is operative to perform functions including but not limited to load balancing, MDMS hot swapping, and failover.

Resident apps 550 may include but are not limited to security, router, SAN/NAS control, and encryption control. JVM 552 may comprise code to operate on and process encryption information (e.g. key information), user authentication, service allocation, and MDMS java operations. Comparatively, JVM 554 may comprise java code that allow it to emulate a mobility device hardware configuration.

In operation MDMS leverages one or more of the above-described components to process requests for webs service and securely provide web services using encryption processes to requesting cooperating components using authentication and verification information. MDMS 502 may cooperate with other MDMS environments such as MDMS environment 536 and 528 to satisfy requests for web services.

In an illustrative implementation, MDMS 501 provides secure management of user data, registry of applications and services, and coordination of storage. In operation, MDMS 501 supports both user access and administrative functions. For example, mobile desktop users may connect to their applications and data through MDMS 501. In this context, upon connection, MDMS 501 checks for user authentication and preferences. Access controls may be automatically imposed and "skins" may be applied to applications and services such that they fit in to a participating user's environment. Requests for applications and data may be processed with the speed of local devices and may be monitored for system improvement.

Furthermore, MDMS 502 is operative to enable users to access file stores (e.g. 518, 532, and 524) to which they have permission, and to publish files to individuals, groups, or the world. In this context, MDMS 502 may employ various MDMS components to provide management of files, applications/services (548 and 550), and mass storage. Moreover, MDMS 502 allows for more robust administration as it provides administrators the ability to connect to MDMS 502 from remote locations using a cooperating mobility device (not shown).

As is illustrated by Figure 5, MDMS 502 may comprise a number of functional components and modules. These components and modules may operate to provide functions including, but not limited to, security, mobility device management, encryption key tracking and management, metering of transactions, file system management, application/service management, application subscriptions management, web services monitoring, legacy infrastructure extension, data storage management, and cluster deployment and management.

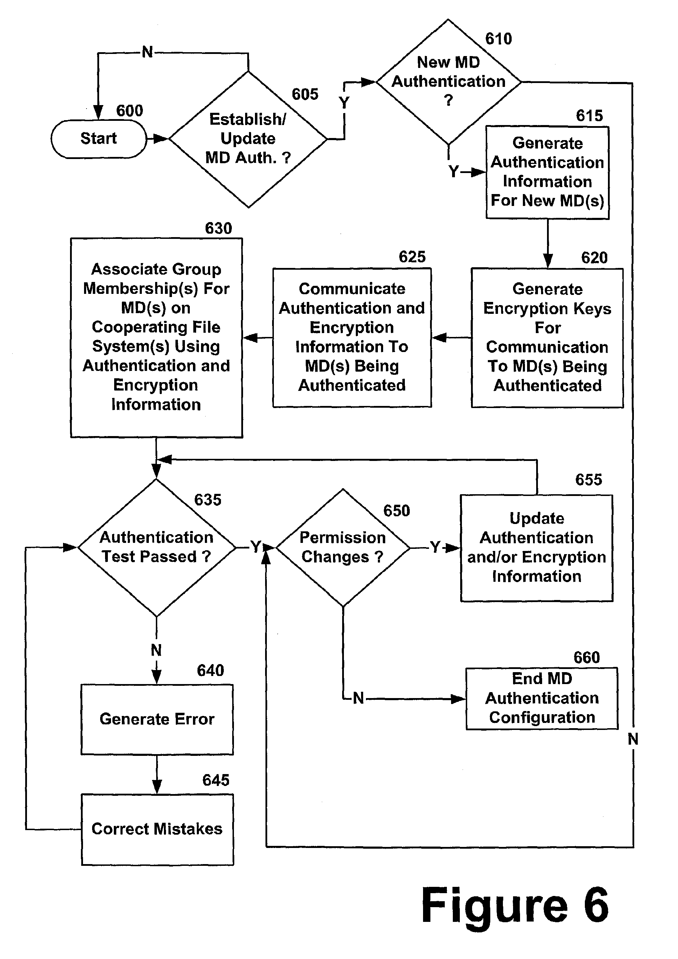

Figure 6 shows the processing performed by exemplary MDMS 502 when cooperating with cooperating MDMS and MDs to process web services. As is shown, processing begins at block 600 and proceeds to block 605 where a check is performed to determine if a cooperating MD authorization needs to be created or updated. If the check at block 605 indicates that the MD authorization does not need to be established or updated, processing reverts to block 600 and continues from there.

However, if the check at block 605 indicates that the MD authorization needs to be established or updated, processing proceeds to block 610 where a check is performed to determine if the cooperating MD is new to the MDMS and requires initial authentication by the MDMS. If the check at block 610 indicates that authentication for a new MD is required, processing proceeds to block 615 where the MDMS generates authentication information for the new MDs. From there processing proceeds to block 620 where encryption keys are generated and communicated to the MD(s) being authenticated. The authentication and encryption information is then communicated to the cooperating MD(s) being authenticated at block 625. The MDMS then associates group memberships for the MD(s) on cooperating file system(s) using the authentication and encryption information. A check is then performed at block 635 to determine if the authentication was successful. If the check was not deemed successful at check 635, processing proceeds to block 640 where an error is generated. The authentication mistakes may then be rectified at block 645. From there processing reverts back to the input of block 635 and proceeds from there.

However, if at block 635 it is identified that the authentication test has passed, processing proceeds to block 650 where a check is performed to determine if permission changes are required for cooperating MDs. If the check at block 650 indicates that permission changes are required, processing proceeds to block 655 where the authentication and/or encryption information is updated. Form there processing reverts back to the input of block 63 5 and continues from there.

If, however, the check at block 650 indicates that there are no permission changes needed, processing proceeds to block 650 where the MD authentication configuration ends. Also, if the check at block 610 indicates that it is not a new MD that requires authentication, processing proceeds to the input of block 650 and continues from there.

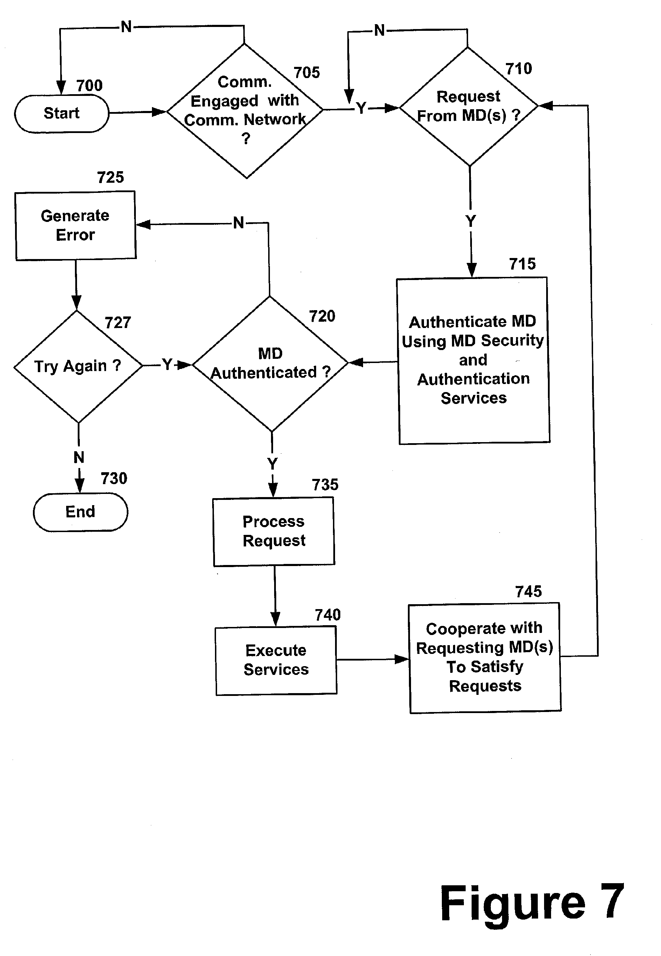

Figure 7 shows the processing performed by exemplary mobility device management server 502 in an illustrative implementation of processing web services. As is shown in Figure 7, processing begins at block 700 and proceeds to block 705 where a check is performed to determine if the MDMS has engaged in communications with a cooperating communications network. If the check at block 700 indicates that communications have not been engaged, processing reverts back to block 700 and continues from there. However, if at block 705 it is determined that communications have been engaged by MDMS with a cooperating communications network, processing proceeds to block 710 where a check is performed to determine if one or more cooperating MDs have requested one or more web service from the MDMS. If the check at block 710 indicates that there are no MD requests for web services, processing reverts to the input of block 710 and continues from there.

However, if the check at block 710 indicates that there are requests for web services by one or more cooperating MDs, processing proceeds to block 715 where the MD is authenticated by the MDMS using MD security and authentication services. A check is then performed at block 720 to determine if the MD has been authenticated. If the MD has been authenticated, processing proceeds to block 735 where the web services request is processed. The web services are then executed by the MDMS and the MD at blocks 740 and 745.

If, however the check at block 720 indicates that the MD has not been authenticated, processing proceeds to block 725 where an error is generated. From there processing proceeds to block 727 where a check is performed to determine if the authentication is to be tried again. If the check at block 727 indicates that MD authentication is to be attempted again, processing reverts to block 720 and continues from there. However, if the check at block 727 indicates that that MD authentication is not to be tried again, processing terminates at block 730.

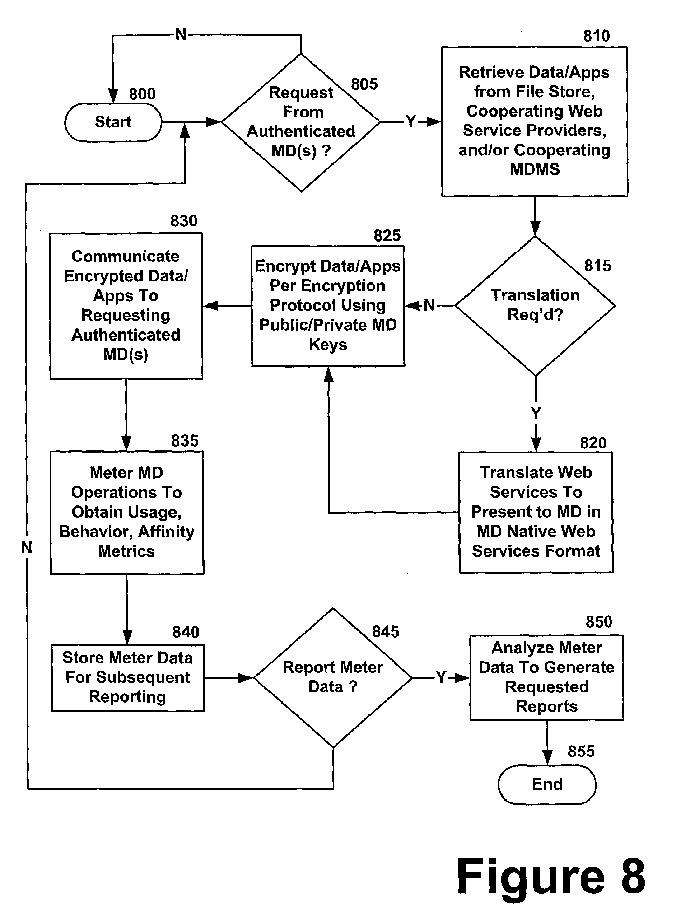

Figure 8 shows the processing performed by exemplary mobility device management server 502 in another implementation of web services processing. As is shown in Figure 8, processing begins at block 800 and proceeds to block 805 where a check is performed to determine if one or more authenticated MDs have requested one or more web services. If at block 805 it is determined that there are no requests for web services from authenticated MDs, processing reverts to block 800 and proceeds from there. However, if at block 805 it is determined that there are requests for web services from one or more authenticated MDs, processing proceeds to block 810 where the MDMS retrieves data and/or computing applications from any of a cooperating file store, cooperating web services providers and other cooperating MDMS. From there a check is performed at block 815 to determine if the retrieved web service requires translation into an MD native web service format. If the block at 815 indicates that there no translation needed, processing proceeds to block 825 where the requested data and/or computing applications are encrypted per a selected encryption protocol (e.g. using public/private keys). From there processing proceeds to block 830 where the encrypted data and/or computing applications are communicated to the requesting authenticated MD(s). From there, MD operations are metered to obtain usage, behavior, affinity, and similar metrics by MDMS at block 835. The meter data is then stored at block 840 for subsequent use. A check is then performed at block 845 to determine whether the stored meter data is to be reported. If the check at block 845 indicates that the meter data is to be reported, processing proceeds to block 850 where the meter data is analyzed to generate meter reports. Processing then terminates at block 855.

If, however, the check at block 815 indicates that translation is required, processing proceeds to block 820 where the requested web services is translated into an MD native web service. From there, processing proceeds to block 825 and continue from there.

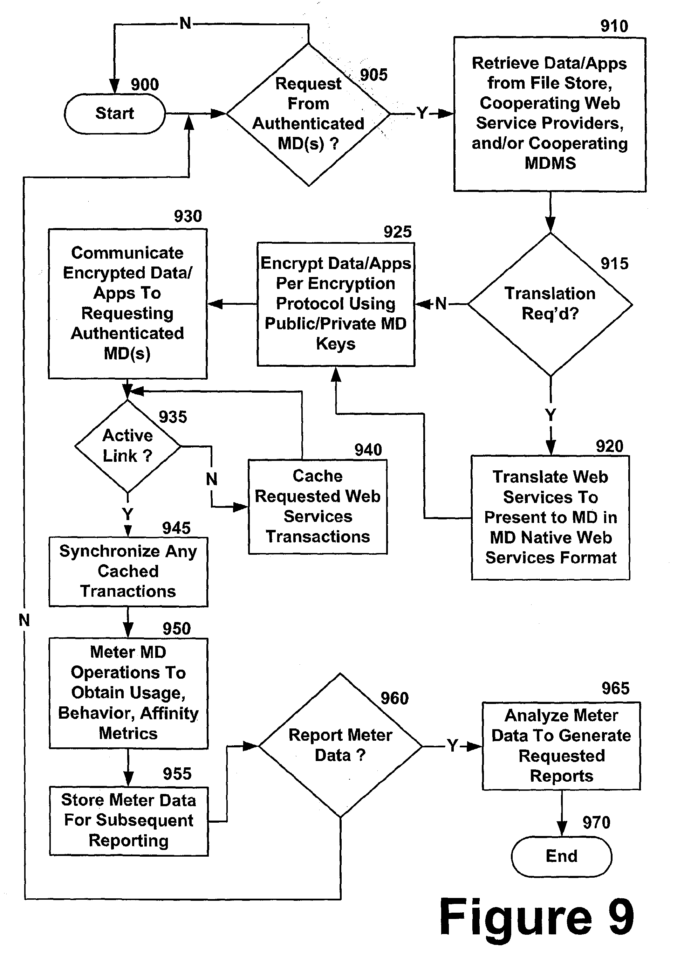

Figure 9 shows the processing performed by exemplary MDMS 502 in another implementation of web services processing. As is shown in Figure 9, processing begins at block 900 and proceeds to block 905 where a check is performed to determine if one or more authenticated MDs have requested one or more web services. If at block 905 it is determined that there are no requests for web services from authenticated MDs, processing reverts to block 900 and proceeds from there. However, if at block 905 it is determined that there are requests for web services from one or more authenticated MDs, processing proceeds to block 910 where the MDMS retrieves data and/or computing applications from any of a cooperating file store, cooperating web services providers and other cooperating MDMS. From there a check is performed at block 915 to determine if the retrieved web service requires translation into an MD native web service format. If the block at 915 indicates that there no translation needed, processing proceeds to block 925 where the requested data and/or computing applications are encrypted per a selected encryption protocol (e.g. using public/private keys). From there processing proceeds to block 930 where the encrypted data and/or computing applications are communicated to the requesting authenticated MD(s). From there a check is performed at block 935 to determine if the communication link between the MDMS and cooperating MDs is active.

If the check at block 935 indicates that the link is active, processing proceeds to block 945 where any cached transactions are synchronized. From there, MD operations are metered to obtain usage, behavior, affinity, and similar metrics by MDMS at block 950. The meter data is then stored at block 955 for subsequent use. A check is then performed at block 960 to determine whether the stored meter data is to be reported. If the check at block 960 indicates that the meter data is to be reported, processing proceeds to block 965 where the meter data is analyzed to generate meter reports. Processing then terminates at block 970.

If, however, the check at block 935 indicates that the communication link is not active, processing proceeds to block 940 where the requested web services are cached. From there processing proceeds to the input of block 935 and continues there from. Also, if the check at block 915 indicates that translation is required, processing proceeds to block 920 where the requested web services is translated into an MD native web service. From there, processing proceeds to block 925 and continue from there.

In sum, the herein described systems and methods provide a mobility device management server for use as part of a mobility device platform. It is understood, however, that the invention is susceptible to various modifications and alternative constructions. There is no intention to limit the invention to the specific constructions described herein. On the contrary, the invention is intended to cover all modifications, alternative constructions, and equivalents falling within the scope and spirit of the invention.

It should also be noted that the present invention may be implemented in a variety of computer environments (including both non-wireless and wireless computer environments), partial computing environments, and real world environments. The various techniques described herein may be implemented in hardware or software, or a combination of both. Preferably, the techniques are implemented in computing environments maintaining programmable computers that include a processor, a storage medium readable by the processor (including volatile and nonvolatile memory and/or storage elements), at least one input device, and at least one output device. Computing hardware logic cooperating with various instructions sets are applied to data to perform the functions described above and to generate output information. The output information is applied to one or more output devices. Programs used by the exemplary computing hardware may be preferably implemented in various programming languages, including high level procedural or object oriented programming language to communicate with a computer system. Illustratively the herein described apparatus and methods may be implemented in assembly or machine language, if desired. In any case, the language may be a compiled or interpreted language. Each such computer program is preferably stored on a storage medium or device (e.g., ROM or magnetic disk) that is readable by a general or special purpose programmable computer for configuring and operating the computer when the storage medium or device is read by the computer to perform the procedures described above. The apparatus may also be considered to be implemented as a computer-readable storage medium, configured with a computer program, where the storage medium so configured causes a computer to operate in a specific and predefined manner.

Although an exemplary implementation of the invention has been described in detail above, those skilled in the art will readily appreciate that many additional modifications are possible in the exemplary embodiments without materially departing from the novel teachings and advantages of the invention. Accordingly, these and all such modifications are intended to be included within the scope of this invention. The invention may be better defined by the following exemplary claims.

## Claims

1. A server computing environment providing web services comprising:
a hardware platform operative to execute an operating system;
a communications interface operative to communicate web services and associated web services transaction data between the server computing environment and cooperating components;
a translation module capable of translating web services into a native format capable of being processed by the cooperating components; and
encryption module operative to encrypt data and computing applications for inclusion in one ore more web services using authentication and verification information of the cooperating components.

2. The server computing environment as recited in claim 1 further comprising resident web services comprising any of a mobility device manager, encryption manager, file transfer manager, web services manager, web services access, webs services metering, UDDI directory, UDDI depository, file system, SOAP proxy, translator, and quality of service.

3. The server computing environment as recited in claim 2 further comprising resident applications comprising any of security application to authenticate the cooperating components, a communications router, a storage area network (SAN)/network attached storage (NAS) controller application, and a encryption control.

4. The server computing environment as recited in claim 3 further comprising java virtual machines operable to provide at least one instruction set to direct the server computing environment to perform operations comprising any of mobility device hardware emulator, encryption control, user authentication, services control and server computing environment control.

5. The server computing environment as recited in claim 4 further comprising a user database having data representative of participating users operating the cooperating components.

6. The server computing environment as recited in claim 5 further comprising a key database having data representative of encryption keys for use in one or more encryption processes by the server computing environment.

7. The server computing environment as recited in claim 6 further comprising a file storage data store operative to store files.

8. The server computing environment as recited in claim 7 wherein the file storage data store is operative to store and process encrypted files.

9. The server computing environment as recited in claim 8 wherein the file storage data store comprises any of a file allocation table (FAT) or new technology file system (NTFS) file system.

10. The server computing environment as recited in claim 9 further comprising a SAN/NAS communications interface operative to connect the server computing environment to cooperating data stores.

11. The server computing environment as recited in claim 10 further comprising encryption drivers operative to process encryption instructions when processing web services.

12. The server computing environment as recited in claim 11 further comprising communication interface drivers operative to interface with cooperating communications hardware components to communicate web services.

13. The server computing environment as recited in claim 12 wherein the server computing environment invokes one or more server computing environment sub-modules to process requests for web services,
wherein the sub-modules comprise any of resident services, resident applications, SOAP chaining, and java virtual machines.

14. The server computing environment as recited in claim 1 wherein the server computing environment cooperates with at least one mobility device providing requests for web services.

15. The server computing environment as recited in claim 1 further comprising an administration module capable of authenticating the mobility device,
wherein the administration module comprises any of a biometric security mechanism, a retinal scan security mechanism, and a voice recognition security mechanism.

16. A method to securely communicate data and computing applications among cooperating computing environments comprising:
providing a server computing environment capable of processing web services'
establishing communications between the server computing environment and cooperating components requesting web services;
authenticating the cooperating components to ensure they have rights and permissions to the requested web services; and
communicating web services to authenticated cooperating components.

17. The method as recited in claim 16 further comprising encrypting the data and computing applications as part of a web service.

18. The method as recited in claim 16 further comprising translating the requested web service into a format native to the cooperating component requesting the web service.

19. The method as recited in claim 16 further comprising performing metering operations on the web service communicated to the authenticated cooperating component.

20. A method to process web services comprising:
receiving a request for a web service from a cooperating component;
authenticating the cooperating component to identify if the cooperating component has rights and privileges to the requested web service;
upon authenticating the cooperating component, encrypting the web service for communication to the requesting component; and
communicating the requested web service to the authenticated cooperating component.

21. The method as recited in claim 20 further comprising translating the requested web service into a format native to the requesting component.

22. The method as recited in claim 21 further comprising performing metering operations on the web service communicated to the authenticated cooperating component.

23. A computer readable medium having computer readable instructions to instruct a computer to perform a method comprising:
receiving a request for a web service from a cooperating component;
authenticating the cooperating component to identify if the cooperating component has rights and privileges to the requested web service;
upon authenticating the cooperating component, encrypting the web service for communication to the requesting component; and
communicating the requested web service to the authenticated cooperating component.

24. A system to securely communicate web services:
a first means for processing web services;
a second means for storing web services and associated web services transaction data;
a third means for encrypting the web services using authentication and verification information provided by cooperating components;
a fourth means for translating the web services to a native format capable of being processed by the cooperating components; and
a fifth means for communicating the web services to the cooperating components.

25. The system as recited in claim 24 further comprising a fifth means for metering the usage of the web services by the cooperating components.

26. The system as recited in claim 25 further comprising a sixth means for authenticating the cooperating components.
